# EUROPEAN PATENT APPLICATION

(11) **EP 4 183 832 A1**
(43) Date of publication of application: **24.05.2023**
(21) Application number: 20944966.9
(22) Date of filing: 14.07.2020
(51) Int. Cl.: C08L 31/04, C08L 67/02, C08L 51/06, B29B 9/12, A43B 13/02

(54) **COMPOSITE MASTERBATCH FORMED BY RECYCLING PET PLASTIC BOTTLES AND REPRODUCING PET, PREPARATION METHOD, AND APPLICATION OF FOAMED SHOE MATERIAL**

(71) Applicant: CCILU International Inc., Taichung, Taiwan 406 (TW)
(72) Inventor: HSU, Chih-jen, Siping (CN); HSU, Chia-ming, Siping (CN); HUANG, Yi-ju, Siping (CN)
(74) Representative: Lang, Christian
(86) International application number: PCT/CN2020/101833
(87) International publication number: WO 2022/011542

(57) **Abstract**

Provided are a composite masterbatch prepared by recycling polyethylene terephthalate (PET) plastic bottles and reproducing PET, a preparation method, and an application of a foamed shoe material. The composite masterbatch is formed by melting and mixing recycling and reproduced PET and ethylene-vinyl acetate (EVA) with a macromolecular coupling agent for modification to form novel a polymer alloy, and then using a high-torque extruding mechanism. The composite masterbatch can be mixed with an EVA copolymer and a thermal plastic elastic material to make a shoe material by means of a foam forming technology, so as to achieve the purposes of waste PET recycling, carbon reduction and environmental protection, and also reduce the demand for fresh PET polymer materials, thereby reducing the demand for petrochemical raw materials.

## Description

### BACKGROUND OF THE INVENTION

### 1. Technical Field

The present invention relates to masterbatch and more particularly to composite masterbatch made from recycling polyethylene terephthalate (PET) and an ethylene-vinyl acetate (EVA) copolymer, a method for making the same, and a use of the same.

### 2. Description of Related Art

Polyalkylene terephthalates, in particular PET, have outstanding chemical stability. This is why PET has been mass-produced for and widely used in materials associated with our daily lives (e.g., fibers, films, and resins) and in the food industry (e.g., to make bottles for drinking water and carbonated drinks). With the mass production and extensive use of PET, however, the myriads of waste fiber/film/resin products and nonconforming PET products have caused environmental issues that should not be taken lightly. Various material recycling methods have therefore been proposed.

It is worth noting that methods involving the cleaning and refilling of PET plastic bottles, which constitute a huge portion of PET wastes, have been abandoned on the grounds of recycling fees, safety, hygiene, and the limitation on the number of times of reuse, and that methods involving the recycling, melting, and reuse of PET plastic bottles are disadvantaged by the dyes in the PET plastic bottle bodies because the dyes not only impose limitation on recycling and reuse, but may also become contaminants in the melting process and thus lower the yield of products made from recycling PET.

### BRIEF SUMMARY OF THE INVENTION

To overcome the technical problems stated above, one objective of the present invention is to provide composite masterbatch containing reprocessed PET derived from recycling PET plastic bottles and an EVA copolymer, a method for making the same, and a use of the same in a foamed shoe material. By melting and mixing recycling PET with EVA and a macromolecular coupling agent until they form a new polymer alloy through chemical modification, and by processing the polymer alloy into masterbatch with an extruder, the invention aims to contribute to the recycling and reuse of waste PET, reduce carbon dioxide emissions, and thereby protect the environment. The demand for virgin PET polymer materials can also be reduced to lower the demand for petrochemical materials.

To achieve the above objective, the present invention provides composite masterbatch that contain reprocessed PET derived from recycling PET plastic bottles. More specifically, the composite masterbatch include: recycling PET (r-PET) obtained by processing recycling PET plastic bottles, an EVA copolymer, and a macromolecular coupling agent, wherein based on the total weight of the composite masterbatch taken as 100 wt%, the r-PET makes up 25~65 wt%, the EVA copolymer 30~70 wt%, and the macromolecular coupling agent 2~10 wt%.

The present invention also provides a method for making composite masterbatch that contain reprocessed PET derived from recycling PET plastic bottles, and the method includes the following steps:
The material acquiring step: An EVA copolymer, a macromolecular coupling agent, and r-PET obtained by processing recycling PET plastic bottles are provided, wherein based on the total weight of the composite masterbatch taken as 100 wt%, the r-PET makes up 25~65 wt%, the EVA copolymer 30~70 wt%, and the macromolecular coupling agent 2~10 wt%.

The plastic melting step: Using a loss-in-weight metering system, the EVA copolymer, the macromolecular coupling agent, and the r-PET are fed in predetermined proportions to form a polymer alloy. The polymer alloy is then extruded into strands by a twin-screw extruder that works at a temperature of 160~245°C and has an average shear rate of 100~300 sec⁻¹ and an extrusion capacity of 100~250 kg/hr, and in which the screws are controlled in such a way that the temperature of the screws is first increased and then decreased within the aforesaid temperature range during the extrusion of the polymer alloy.

The semi-finished product drawing step: The twin-screw extruder is controlled in such a way that the extruded polymer alloy strands are drawn and are guided through a water channel for cooling.

The cutting and granulating step: The twin-screw extruder is controlled in such a way that the cooled polymer alloy strands are cut into granules and are vibrated while being sieved so as to produce the composite masterbatch.

Another objective of the present invention is to provide a method for using composite masterbatch that contain r-PET and an EVA copolymer in the production of a shoe material. The composite masterbatch is mixed with a second EVA copolymer and a thermoplastic elastic material before a foaming and molding technique is applied to the mixture to make a shoe material of a predetermined shape. This method is effective in putting recycling PET to use and can reduce the demand for virgin PET polymer materials in the production of shoe materials.

To achieve the above objective, the present invention provides a method for using composite masterbatch that contain reprocessed PET derived from recycling PET plastic bottles in the production of a shoe material, and the method includes the following steps:
The material acquiring step: An EVA copolymer, a macromolecular coupling agent, and r-PET obtained by processing recycling PET plastic bottles are provided, wherein based on the total weight of the composite masterbatch taken as 100 wt%, the r-PET makes up 25~65 wt%, the EVA copolymer 30~70 wt%, and the macromolecular coupling agent 2~10 wt%.

The plastic melting step: Using a loss-in-weight metering system, the EVA copolymer, the macromolecular coupling agent, and the PET are fed in predetermined proportions to form a polymer alloy. The polymer alloy is then extruded into strands by a twin-screw extruder that works at a temperature of 160~245°C and has an average shear rate of 100~300 sec⁻¹ and an extrusion capacity of 100~250 kg/hr, and in which the screws are controlled in such a way that the temperature of the screws is first increased and then decreased within the aforesaid temperature range during the extrusion of the polymer alloy in order for the screws to heat the polymer alloy in stages, or sequentially at 160, 180, 190, 200, 220, 230, 240, 245, 240, and 235°C immediately after the polymer alloy is fed into the twin-screw extruder, to be exact.

The semi-finished product drawing step: The twin-screw extruder is controlled in such a way that the extruded polymer alloy strands are drawn and are guided through a water channel for cooling.

The cutting and granulating step: The twin-screw extruder is controlled in such a way that the cooled polymer alloy strands are cut into granules and are vibrated while being sieved so as to produce the composite masterbatch.

The foaming mold fine-tuning step: The length, width, and/or height of the mold cavity of the foaming mold to be used are adjusted according to the predetermined dimensions of the shoe material, wherein the length can be fine-tuned within the range of 5~10 mm, the width within the range of 5~10 mm, and the height within the range of 10~20 mm.

The foaming and molding step: The composite masterbatch is mixed with a second EVA copolymer and an elastic material, and the mixture is transferred into the foaming mold and subjected to a foaming and molding process to produce the shoe material.

The techniques and means adopted by the present invention to achieve the foregoing objectives, along with other effects of the invention, are detailed below with reference to some preferred embodiments of the invention.

### BRIEF DESCRIPTION OF THE SEVERAL VIEWS OF THE DRAWINGS

FIG. 1 shows the appearance of a sheet made by foaming r-PET in a mold of its original size;
FIG. 2 shows the appearance of a T-shaped mold made from the r-PET-containing composite masterbatch of the present invention;
FIG. 3 shows the appearance of a sheet made by foaming an EVA material in a mold of its original size; and
FIG. 4 shows the appearance of a sheet made by foaming r-PET in a mold whose dimensions have been modified.

### DETAILED DESCRIPTION OF THE INVENTION

To make it easier to understand the present invention, some embodiments of the invention are described as follows.

The features and advantages of the present invention will be detailed below. It should be understood that the various aspects of the invention can be changed in different ways without departing from the scope of the invention. The following description essentially serves an illustrative purpose and is not intended to be restrictive of the invention.

The present invention provides composite masterbatch that contain reprocessed PET derived from recycling PET plastic bottles. The composite masterbatch include r-PET, an EVA copolymer, and a macromolecular coupling agent, wherein based on the total weight of the composite masterbatch taken as 100 wt%, the r-PET constitutes 25~65 wt%, the EVA copolymer 30~70 wt%, and the macromolecular coupling agent 2~10 wt%.

In this embodiment of the present invention, the r-PET is obtained by processing recycling PET plastic bottles, wherein the recycling packaging materials include containers made from PET, such as PET plastic bottles. The r-PET has an intrinsic viscosity (IV) of 0.6~1.0 dL/g.

In this embodiment of the present invention, the EVA copolymer has a vinyl acetate (VA) content of 8~40 wt% and has a melt mass flow rate of 1~10 g/10 min at 190°C under a 2.16-kg load.

In this embodiment of the present invention, the macromolecular coupling agent may be a polymer or graft polymer with or without an epoxy functional group, or the macromolecular coupling agent may be a graft polymer (oligomer) containing a primary (1°) amine functional group, a secondary (2°) amine functional group, or isocyanate. Preferably, the macromolecular coupling agent is a graft polymer or polymer with an epoxy functional group. More specifically, the macromolecular coupling agent may be selected from the group consisting of glycidyl methacrylate (GMA), maleic anhydride (MA, also known as *cis*-butenedioic anhydride), and acrylic acid (AA), in which GMA is preferred, with a graft polymer formed by grafting GMA to an EVA copolymer being the most preferred. When the macromolecular coupling agent is a polymer of graft polymer with an epoxy functional group, it is preferable that the macromolecular coupling agent is a polymer derivative containing the epoxy functional group at 3~16 mol%.

The composite masterbatch of the present invention is made by, among other steps, melting and mixing the r-PET and the EVA copolymer with the macromolecular coupling agent so as to form a polymer alloy. The r-PET and the EVA copolymer undergo etherification or esterification after addition of the macromolecular coupling agent and are thus chemically modified to become highly compatible with each other, which enables formation the polymer alloy.

The following [structural formula 1] shows the structural formula of the polymer alloy formed by etherification of the r-PET (indicated by PET in all the formulae and equations given herein) and the EVA copolymer after addition of the macromolecular coupling agent, wherein the r-PET has a carboxyl group at one end:

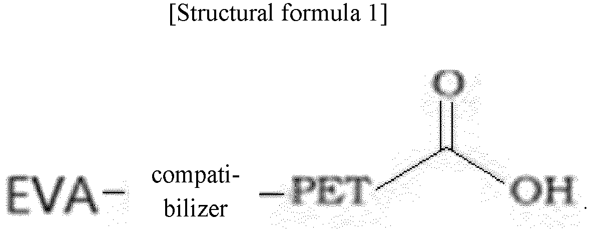

The following [structural formula 2] shows the structural formula of the polymer alloy formed by esterification of the r-PET and the EVA copolymer after addition of the macromolecular coupling agent, wherein the r-PET has a hydroxyl group at one end:

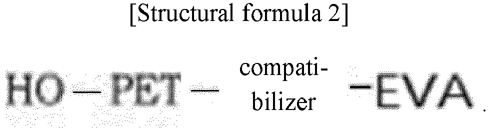

The r-PET, EVA copolymer, and epoxy-functionalized EVA (i.e., macromolecular coupling agent) used in the composite masterbatch of the present invention have their structures represented respectively by the following [chemical formula 1], [chemical formula 2], and [chemical formula 3]: 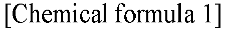 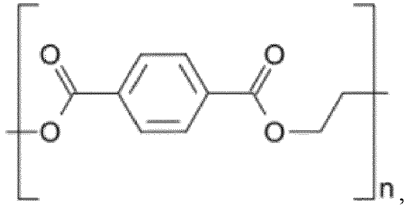 where n=100 mole; 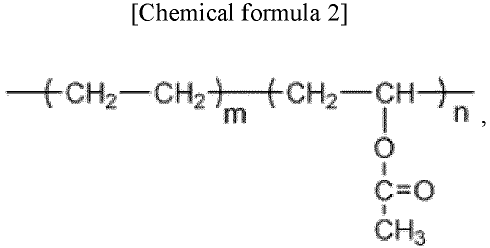 where m=60~84 mol% and n=16~40 mol%, given that m+n=100 mol%; and 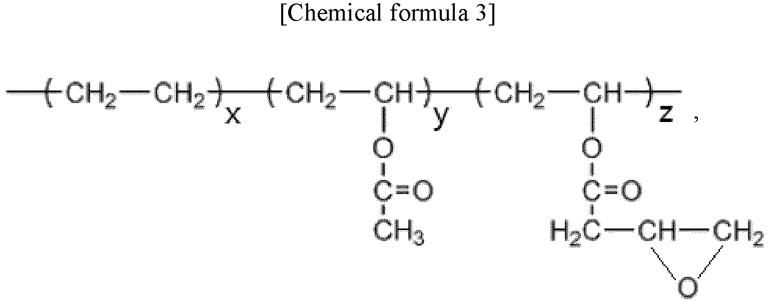 where x=45~80 mol%, y=5~30 mol%, and z=5~26 mol%, given that x+y+z=100 mol%.

The following [chemical equation 1] shows the mechanism of etherification between the r-PET and the epoxy-functionalized EVA:

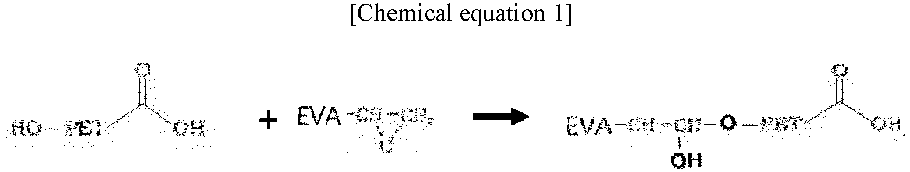

The etherified compound produced by [chemical equation 1] has an end group with affinity for the EVA copolymer and an end group with affinity for the r-PET. The following [chemical equation 2] shows the mechanism of compatibilzation between the etherified compound, the EVA copolymer, and the r-PET:

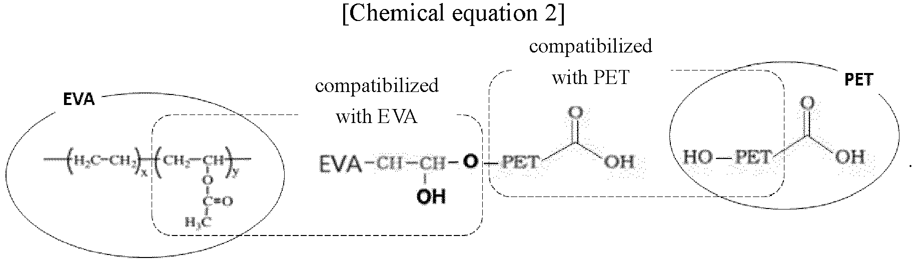

The following [chemical equation 3] shows the mechanism of esterification between the r-PET and the epoxy-functionalized EVA:

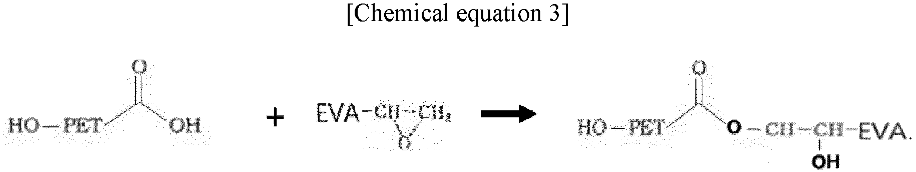

The esterified compound produced by [chemical equation 3] has an end group with affinity for the EVA copolymer and an end group with affinity for the r-PET. The following [chemical equation 4] shows the mechanism of compatibilization between the esterified compound, the EVA copolymer, and the r-PET:

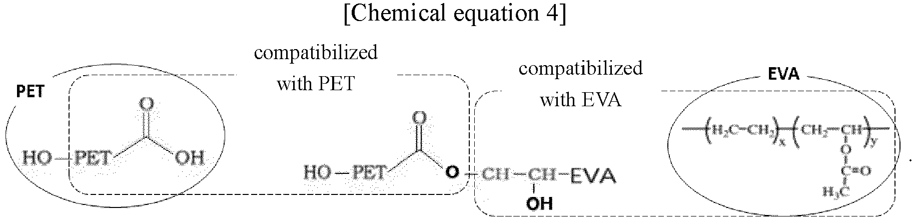

The formula of the disclosed composite masterbatch containing reprocessed PET derived from recycling PET plastic bottles has been disclosed above along with the mechanisms of the reactions involved in the melting, mixing, and compatibilization of the ingredients. The following paragraphs describe a manufacturing method and a use method of the composite masterbatch.

The method of the present invention for making composite masterbatch that contain reprocessed PET derived from recycling PET plastic bottles includes the following steps:

The plastic melting step: Using a loss-in-weight metering system, an EVA copolymer, a macromolecular coupling agent, and r-PET are fed in predetermined proportions to form a polymer alloy. The polymer alloy is then extruded into strands by a twin-screw extruder that works at a temperature of 160~245°C and has an average shear rate of 100~300 sec⁻¹ and an extrusion capacity of 100~250 kg/hr, and in which the screws are controlled in such a way that the temperature of the screws is first increased and then decreased within the aforesaid temperature range during the extrusion of the polymer alloy.

The semi-finished product drawing step: The twin-screw extruder is controlled in such a way that the extruded polymer alloy strands are drawn and are guided through a water channel for cooling.

The cutting and granulating step: The twin-screw extruder is controlled in such a way that the cooled polymer alloy strands are cut into granules and are vibrated while being sieved so as to produce the composite masterbatch.

In this embodiment of the present invention, the plastic melting step is so designed that the temperature of the screws is first increased and then decreased during extrusion of the polymer alloy in order for the screws to heat the polymer alloy in stages. More specifically, the screws heat the polymer alloy sequentially at 160, 180, 190, 200, 220, 230, 240, 245, 240, and 235°C immediately after the polymer alloy is fed into the twin-screw extruder. The stepwise heating approach ensures that an initial reaction takes place between the r-PET, the EVA copolymer, and the epoxy-functionalized EVA before the cracking temperature (270°C) of the EVA copolymer is reached. This prevents the EVA copolymer from being cracked and the epoxy-functionalized EVA from undergoing a ring-opening reaction, lest autopolymerization of the two EVA ingredients keep the r-PET and the EVA copolymer from forming a uniform polymer alloy and thus compromise the foaming uniformity of the resulting r-PET/EVA alloy.

In this embodiment of the present invention, the method for making the composite masterbatch containing reprocessed PET derived from recycling PET plastic bottles further includes a collecting and bagging step to be performed after the cutting and granulating step. The collecting and bagging step includes collecting the sieved granulated polymer alloy (i.e., the composite masterbatch) and putting it into bags.

The composite masterbatch made by the foregoing method according to the aforesaid formula is used mainly, but not necessarily, in making shoe materials. In one embodiment of the present invention, the composite masterbatch is mixed with a second EVA copolymer and a thermoplastic elastic material, and the mixture is made into a shoe material by a foaming and molding process.

The method of the present invention for using the foregoing composite masterbatch in making a shoe material includes the following steps:
The material acquiring step: An EVA copolymer, a macromolecular coupling agent, and r-PET obtained by processing recycling PET plastic bottles are provided, wherein based on the total weight of the composite masterbatch taken as 100 wt%, the r-PET makes up 25~65 wt%, the EVA copolymer 30~70 wt%, and the macromolecular coupling agent 2~10 wt%.

The plastic melting step: Using a loss-in-weight metering system, the EVA copolymer, the macromolecular coupling agent, and the r-PET are fed in predetermined proportions to form a polymer alloy. The polymer alloy is then extruded into strands by a twin-screw extruder that works at a temperature of 160~245°C and has an average shear rate of 100~300 sec⁻¹ and an extrusion capacity of 100~250 kg/hr, and in which the screws are controlled in such a way that the temperature of the screws is first increased and then decreased within the aforesaid temperature range during the extrusion of the polymer alloy in order for the screws to heat the polymer alloy in stages, or sequentially at 160, 180, 190, 200, 220, 230, 240, 245, 240, and 235°C immediately after the polymer alloy is fed into the twin-screw extruder, to be exact.

The semi-finished product drawing step: The twin-screw extruder is controlled in such a way that the extruded polymer alloy strands are drawn and are guided through a water channel for cooling.

The cutting and granulating step: The twin-screw extruder is controlled in such a way that the cooled polymer alloy strands are cut into granules and are vibrated while being sieved so as to produce the composite masterbatch.

The foaming mold fine-tuning step: The length, width, and/or height of the mold cavity of the foaming mold to be used are adjusted according to the predetermined dimensions of the shoe material, wherein the length can be fine-tuned within the range of 5~10 mm, the width within the range of 5~10 mm, and the height within the range of 10~20 mm.

The foaming and molding step: The composite masterbatch is mixed with a second EVA copolymer and an elastic material, and the mixture is transferred into the foaming mold and subjected to a foaming and molding process to produce the shoe material.

The following paragraphs provide actual examples of the disclosed composite masterbatch containing reprocessed PET derived from recycling PET plastic bottles, of the disclosed method for making the composite masterbatch, and of the disclosed method for using the composite masterbatch in making a shoe material.

The r-PET used in the composite masterbatch of the present invention may be derived from waste PET plastic bottles. When the r-PET is derived from waste PET plastic bottles, a known PET plastic bottle recycling technique is used to produce the r-PET. More specifically, one method for processing waste PET plastic bottles includes crushing, washing, separating, and drying. In the crushing step, waste PET plastic bottles are cut into small pieces, and the small amount of original materials left on the pieces (e.g., shredded paper labels and plastic caps) is removed by appropriate methods. After that, the washing, separating, and drying steps are sequentially performed to obtain pure PET fragments or PET flakes as the r-PET used in the invention.

The formulae of embodiments 1~4 of the composite masterbatch of the present invention are presented in the following [table 1]:

**[Table 1]**

| (the content of each ingredient (in the unit of wt%) in each of embodiments 1~4 is based on the total weight of the corresponding composite masterbatch taken as 100 wt%) | | | |
|---|---|---|---|
| Embodiment | r-PET content | EVA content | Macromolecular coupling agent content |
| 1 | 25 | 70 | 5 |
| 2 | 25 | 65 | 10 |
| 3 | 65 | 30 | 5 |
| 4 | 65 | 25 | 10 |

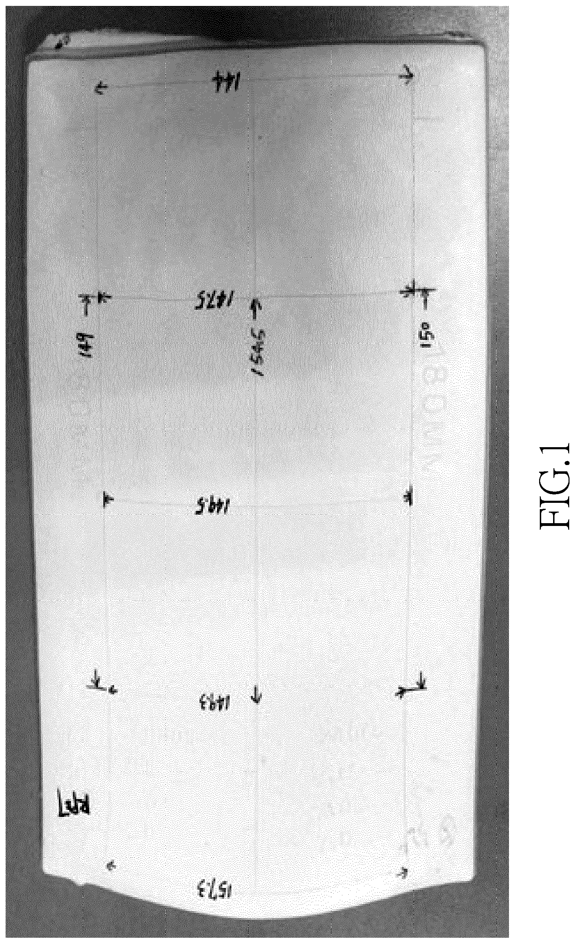

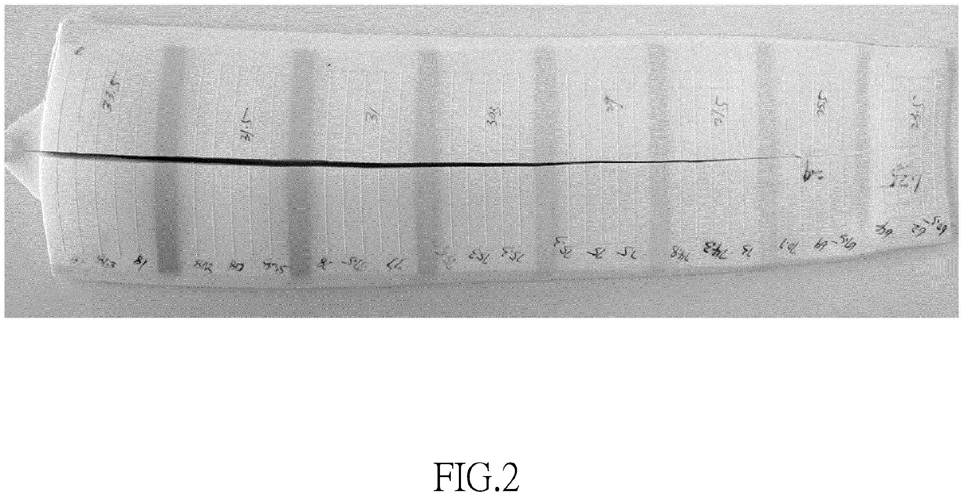

Referring to the following [table 2] and [table 3] and FIG. 1 to FIG. 4, the r-PET-containing composite masterbatch of the present invention is used to prepare a foamed shoe material. During the foaming process, the expansion ratios of the r-PET-containing composite masterbatch of the invention were higher than those of the conventional EVA material. As shown in FIG. 1, the sheet made by foaming the composite masterbatch of the invention in a mold of its original size was markedly irregular in shape, and the lines on the sheet were distorted. In view of this, experiments were conducted repeatedly on products of different structures, using the T-shaped mold shown in FIG. 2, and a comparison of the products confirmed that the r-PET-containing composite masterbatch of the invention had higher expansion ratios than the conventional EVA material during the foaming process. Hence, when using the r-PET-containing composite masterbatch of the invention to make a foamed shoe material, the dimensions of the mold cavity of the mold must be adjusted to lower the defective rate of the foamed products in terms of appearance.

Referring to [table 2], when the mold cavity was 8 mm high, the length and width of the product made from the r-PET-containing composite masterbatch of the present invention were relatively close to those of the standard, and the thickness of the product was 15% greater than that of the standard. A comparison between the different steps suggests that when making a new mold whose mold cavity is 6 mm high or higher, the length of the mold cavity should be 4% less than when the original material is used, the width of the mold cavity 3~4% less than when the original material is used, and the height of the mold cavity 10~20% less than when the original material is used, and that the design dimensions of the foamed product should be calculated based on the thickness of the product.

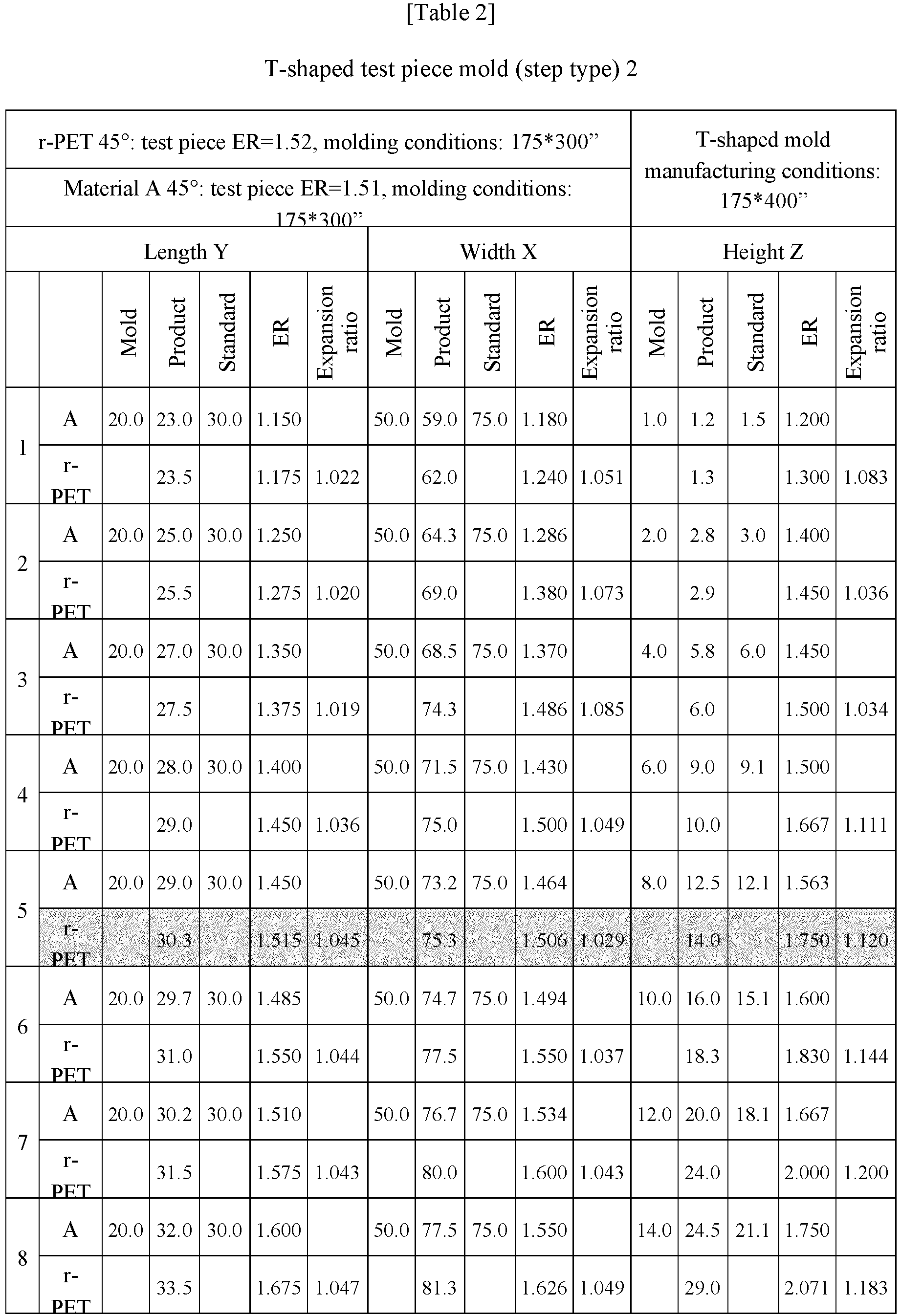

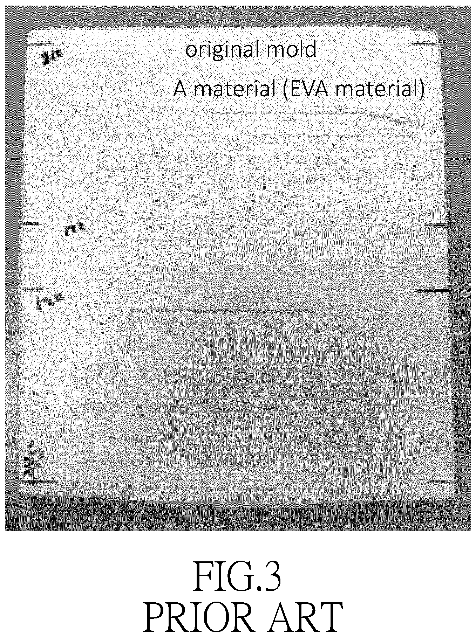

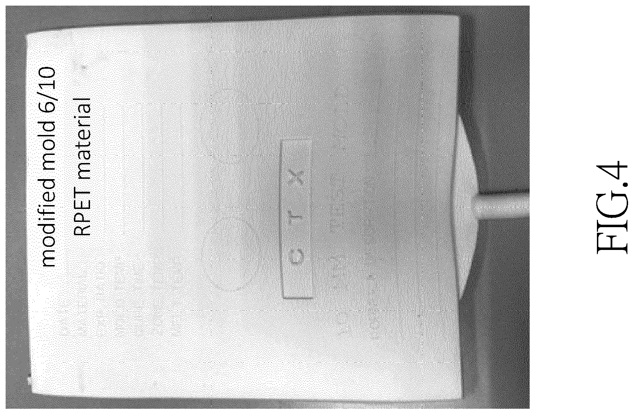

After a series of tests, the differences between the r-PET-containing composite masterbatch and the conventional EVA material were found, and the T-shaped mold and the granule formula were adjusted by taking into account the influence of the composite masterbatch on the width and thickness of the foamed product. The test results of the test pieces in FIG. 3 and FIG. 4 show that once the mold was modified, the foamed shoe material product made from the composite masterbatch of the present invention (i.e., the test piece in FIG. 4) had the same dimensions as the foamed product made from the conventional EVA material (i.e., the test piece in FIG. 3), as detailed in [table 3].

**[Table 3]**

| Type of raw material | Measuring point | Z-axis dimension, i.e., width (mm) | X-axis dimension, i.e., thickness (mm) | |
|---|---|---|---|---|
| r-PET | #1 | 17.0 | 221 | Injection-molded in the modified mold |
| | #2 | 16.5 | 221 | |
| | #3 | 16.3 | 219 | |
| EVA | #1 | 16.7 | 220 | EVA molded in the original mold |
| | #2 | 16.3 | 220 | |
| | #3 | 16.0 | 219 | |
| Conclusion: Z- and X-axis data resulting from the modified mold are similar to those produced by molding EVA in the original mold. | | | | |

## Claims

1. Composite masterbatch containing reprocessed PET (polyethylene terephthalate) derived from recycling PET plastic bottles, comprising:
recycling PET (r-PET) obtained by processing recycling PET plastic bottles;
an ethylene-vinyl acetate (EVA) copolymer; and
a macromolecular coupling agent;
wherein based on a total weight of the composite masterbatch taken as 100 wt%, the r-PET accounts for 25~65 wt%, the EVA copolymer 30~70 wt%, and the macromolecular coupling agent 2~10 wt%.

2. The composite masterbatch containing reprocessed PET derived from recycling PET plastic bottles as claimed in claim 1, wherein the r-PET has an intrinsic viscosity (IV) of 0.6~1.0 dL/g.

3. The composite masterbatch containing reprocessed PET derived from recycling PET plastic bottles as claimed in claim 1, wherein the EVA copolymer has a vinyl acetate (VA) content of 8~40 wt% and has a melt mass flow rate (MFR) of 1~10 g/10 min at 190°C under a load of 2.16 kg.

4. The composite masterbatch containing reprocessed PET derived from recycling PET plastic bottles as claimed in claim 1, wherein the macromolecular coupling agent is selected from the group consisting of glycidyl methacrylate (GMA), *cis*-butenedioic anhydride (also known as maleic anhydride, or MA), acrylic acid (AA), a graft polymer containing a primary (1°) amine functional group, a graft polymer containing a secondary (2°) amine functional group, and a graft polymer containing isocyanate.

5. A method for making composite masterbatch containing reprocessed PET (polyethylene terephthalate) derived from recycling PET plastic bottles, the method comprising:
a material acquiring step, in which an ethylene-vinyl acetate (EVA) copolymer, a macromolecular coupling agent, and recycling PET (r-PET) obtained by processing recycling PET plastic bottles are provided, wherein based on a total weight of the composite masterbatch taken as 100 wt%, the r-PET accounts for 25~65 wt%, the EVA copolymer 30~70 wt%, and the macromolecular coupling agent 2~10 wt%;
a plastic melting step, in which a loss-in-weight metering system is used to feed the EVA copolymer, the macromolecular coupling agent, and the r-PET in predetermined proportions so as to form a polymer alloy, the polymer alloy is extruded into strands by a twin-screw extruder that works at a temperature of 160~245°C and has an average shear rate of 100~300 sec⁻¹ and an extrusion capacity of 100~250 kg/hr, and screws of the twin-screw extruder are so controlled that a temperature of the screws is first increased and then decreased within the aforesaid temperature range during extrusion of the polymer alloy;
a semi-finished product drawing step, in which the twin-screw extruder is so controlled that the strands are drawn and are guided through a water channel for cooling; and a cutting and granulating step, in which the twin-screw extruder is so controlled that the cooled strands are cut into granules and are vibrated while being sieved so as to produce the composite masterbatch.

6. The method for making composite masterbatch containing reprocessed PET derived from recycling PET plastic bottles as claimed in claim 5, wherein in the plastic melting step, the temperature of the screws is first increased and then decreased in order for the screws to heat the polymer alloy in stages during the extrusion of the polymer alloy, or sequentially at 160, 180, 190, 200, 220, 230, 240, 245, 240, and 235°C immediately after the polymer alloy is fed into the twin-screw extruder, to be exact.

7. The method for making composite masterbatch containing reprocessed PET derived from recycling PET plastic bottles as claimed in claim 6, wherein:
the r-PET has an intrinsic viscosity (IV) of 0.6~1.0 dL/g; and
the EVA copolymer has a vinyl acetate (VA) content of 8~40 wt% and has a melt mass flow rate (MFR) of 1~10 g/10 min at 190°C under a load of 2.16 kg.

8. The method for making composite masterbatch containing reprocessed PET derived from recycling PET plastic bottles as claimed in claim 6, wherein the macromolecular coupling agent is selected from the group consisting of glycidyl methacrylate (GMA), *cis-*butenedioic anhydride (also known as maleic anhydride, or MA), acrylic acid (AA), a graft polymer containing a primary (1°) amine functional group, a graft polymer containing a secondary (2°) amine functional group, and a graft polymer containing isocyanate.

9. A method for using composite masterbatch containing reprocessed PET (polyethylene terephthalate) derived from recycling PET plastic bottles in making a shoe material, the method comprising:
a material acquiring step, in which an ethylene-vinyl acetate (EVA) copolymer, a macromolecular coupling agent, and recycling PET (r-PET) obtained by processing recycling PET plastic bottles are provided, wherein based on a total weight of the composite masterbatch taken as 100 wt%, the r-PET accounts for 25~65 wt%, the EVA copolymer 30~70 wt%, and the macromolecular coupling agent 2~10 wt%;
a plastic melting step, in which a loss-in-weight metering system is used to feed the EVA copolymer, the macromolecular coupling agent, and the r-PET in predetermined proportions so as to form a polymer alloy, the polymer alloy is extruded into strands by a twin-screw extruder that works at a temperature of 160~245°C and has an average shear rate of 100~300 sec⁻¹ and an extrusion capacity of 100~250 kg/hr, and screws of the twin-screw extruder are so controlled that a temperature of the screws is first increased and then decreased within the aforesaid temperature range during extrusion of the polymer alloy in order for the screws to heat the polymer alloy in stages, or sequentially at 160, 180, 190, 200, 220, 230, 240, 245, 240, and 235°C immediately after the polymer alloy is fed into the twin-screw extruder, to be exact;
a semi-finished product drawing step, in which the twin-screw extruder is so controlled that the strands are drawn and are guided through a water channel for cooling;
a cutting and granulating step, in which the twin-screw extruder is so controlled that the cooled strands are cut into granules and are vibrated while being sieved so as to produce the composite masterbatch;
a foaming mold fine-tuning step, in which a mold cavity of a foaming mold is adjusted in length, width, and/or height according to predetermined dimensions of the shoe material, wherein the length is fine-tunable within a range of 5~10 mm, the width within a range of 5~10 mm, and the height within a range of 10~20 mm; and
a foaming and molding step, in which the composite masterbatch is mixed with a second EVA copolymer and an elastic material, and a resulting mixture is transferred into the foaming mold and is subjected to foaming and molding in order to produce the shoe material.

10. The method for using composite masterbatch containing reprocessed PET derived from recycling PET plastic bottles in making a shoe material as claimed in claim 9, wherein:
the r-PET has an intrinsic viscosity (IV) of 0.6~1.0 dL/g;
the EVA copolymer has a vinyl acetate (VA) content of 8~40 wt% and has a melt mass flow rate (MFR) of 1~10 g/10 min at 190°C under a load of 2.16 kg; and
the macromolecular coupling agent is selected from the group consisting of glycidyl methacrylate (GMA), *cis*-butenedioic anhydride (also known as maleic anhydride, or MA), acrylic acid (AA), a graft polymer containing a primary (1°) amine functional group, a graft polymer containing a secondary (2°) amine functional group, and a graft polymer containing isocyanate.

## Amended claims

### Amended claims under Art. 19.1 PCT

1. Composite masterbatch containing reprocessed PET (polyethylene terephthalate) derived from recycling PET plastic bottles, comprising:
recycling PET (r-PET) obtained by processing recycling PET plastic bottles;
an ethylene-vinyl acetate (EVA) copolymer; and
a macromolecular coupling agent;
wherein based on a total weight of the composite masterbatch taken as 100 wt%, the r-PET accounts for 25~65 wt%, the EVA copolymer 30~70 wt%, and the macromolecular coupling agent 2~10 wt%, the r-PET, the EVA copolymer and the macromolecular coupling agent are melted and mixed in proportion to produce the polymer alloy, the polymer alloy is heated and then cooled at a temperature of 160-245°C in the process of extruding to form the composite masterbatch, and the composite masterbatch is used for foam molding shoe material by mixing with the EVA copolymer and an elastic material.

2. The composite masterbatch containing reprocessed PET derived from recycling PET plastic bottles as claimed in claim 1, wherein the r-PET has an intrinsic viscosity (IV) of 0.6~1.0 dL/g.

3. The composite masterbatch containing reprocessed PET derived from recycling PET plastic bottles as claimed in claim 1, wherein the EVA copolymer has a vinyl acetate (VA) content of 8~40 wt% and has a melt mass flow rate (MFR) of 1~10 g/10 min at 190°C under a load of 2.16 kg.

4. The composite masterbatch containing reprocessed PET derived from recycling PET plastic bottles as claimed in claim 1, wherein the macromolecular coupling agent is selected from the group consisting of glycidyl methacrylate (GMA), cis-butenedioic anhydride (also known as maleic anhydride, or MA), acrylic acid (AA), a graft polymer containing a primary (1°) amine functional group, a graft polymer containing a secondary (2°) amine functional group, and a graft polymer containing isocyanate.

5. A method for making composite masterbatch containing reprocessed PET (polyethylene terephthalate) derived from recycling PET plastic bottles, the method comprising:
a material acquiring step, in which an ethylene-vinyl acetate (EVA) copolymer, a macromolecular coupling agent, and recycling PET (r-PET) obtained by processing recycling PET plastic bottles are provided, wherein based on a total weight of the composite masterbatch taken as 100 wt%, the r-PET accounts for 25~65 wt%, the EVA copolymer 30~70 wt%, and the macromolecular coupling agent 2~10 wt%;
a plastic melting step, in which a loss-in-weight metering system is used to feed the EVA copolymer, the macromolecular coupling agent, and the r-PET in predetermined proportions so as to form a polymer alloy, the polymer alloy is extruded into strands by a twin-screw extruder that works at a temperature of 160~245°C and has an average shear rate of 100~300 sec-1 and an extrusion capacity of 100~250 kg/hr, and screws of the twin-screw extruder are so controlled that a temperature of the screws is first increased and then decreased within the aforesaid temperature range during extrusion of the polymer alloy;
a semi-finished product drawing step, in which the twin-screw extruder is so controlled that the strands are drawn and are guided through a water channel for cooling; and
a cutting and granulating step, in which the twin-screw extruder is so controlled that the cooled strands are cut into granules and are vibrated while being sieved so as to produce the composite masterbatch, and the composite masterbatch is used for foam molding shoe material by mixing with the EVA copolymer and an elastic material.

6. The method for making composite masterbatch containing reprocessed PET derived from recycling PET plastic bottles as claimed in claim 5, wherein in the plastic melting step, the temperature of the screws is first increased and then decreased in order for the screws to heat the polymer alloy in stages during the extrusion of the polymer alloy, or sequentially at 160, 180, 190, 200, 220, 230, 240, 245, 240, and 235°C immediately after the polymer alloy is fed into the twin-screw extruder, to be exact.

7. The method for making composite masterbatch containing reprocessed PET derived from recycling PET plastic bottles as claimed in claim 6, wherein:
the r-PET has an intrinsic viscosity (IV) of 0.6~1.0 dL/g; and
the EVA copolymer has a vinyl acetate (VA) content of 8~40 wt% and has a melt mass flow rate (MFR) of 1~10 g/10 min at 190°C under a load of 2.16 kg.

8. The method for making composite masterbatch containing reprocessed PET derived from recycling PET plastic bottles as claimed in claim 6, wherein the macromolecular coupling agent is selected from the group consisting of glycidyl methacrylate (GMA), *cis-*butenedioic anhydride (also known as maleic anhydride, or MA), acrylic acid (AA), a graft polymer containing a primary (1°) amine functional group, a graft polymer containing a secondary (2°) amine functional group, and a graft polymer containing isocyanate.

9. A method for using composite masterbatch containing reprocessed PET (polyethylene terephthalate) derived from recycling PET plastic bottles in making a shoe material, the method comprising:
a material acquiring step, in which an ethylene-vinyl acetate (EVA) copolymer, a macromolecular coupling agent, and recycling PET (r-PET) obtained by processing recycling PET plastic bottles are provided, wherein based on a total weight of the composite masterbatch taken as 100 wt%, the r-PET accounts for 25~65 wt%, the EVA copolymer 30~70 wt%, and the macromolecular coupling agent 2~10 wt%;
a plastic melting step, in which a loss-in-weight metering system is used to feed the EVA copolymer, the macromolecular coupling agent, and the r-PET in predetermined proportions so as to form a polymer alloy, the polymer alloy is extruded into strands by a twin-screw extruder that works at a temperature of 160~245°C and has an average shear rate of 100~300 sec⁻¹ and an extrusion capacity of 100~250 kg/hr, and screws of the twin-screw extruder are so controlled that a temperature of the screws is first increased and then decreased within the aforesaid temperature range during extrusion of the polymer alloy in order for the screws to heat the polymer alloy in stages, or sequentially at 160, 180, 190, 200, 220, 230, 240, 245, 240, and 235°C immediately after the polymer alloy is fed into the twin-screw extruder, to be exact;
a semi-finished product drawing step, in which the twin-screw extruder is so controlled that the strands are drawn and are guided through a water channel for cooling;
a cutting and granulating step, in which the twin-screw extruder is so controlled that the cooled strands are cut into granules and are vibrated while being sieved so as to produce the composite masterbatch;
a foaming mold fine-tuning step, in which a mold cavity of a foaming mold is adjusted in length, width, and/or height according to predetermined dimensions of the shoe material, wherein the length is fine-tunable within a range of 5~10 mm, the width within a range of 5~10 mm, and the height within a range of 10~20 mm; and
a foaming and molding step, in which the composite masterbatch is mixed with a second EVA copolymer and an elastic material, and a resulting mixture is transferred into the foaming mold and is subjected to foaming and molding in order to produce the shoe material.

10. The method for using composite masterbatch containing reprocessed PET derived from recycling PET plastic bottles in making a shoe material as claimed in claim 9, wherein:
the r-PET has an intrinsic viscosity (IV) of 0.6~1.0 dL/g;
the EVA copolymer has a vinyl acetate (VA) content of 8~40 wt% and has a melt mass flow rate (MFR) of 1~10 g/10 min at 190°C under a load of 2.16 kg; and
the macromolecular coupling agent is selected from the group consisting of glycidyl methacrylate (GMA), *cis*-butenedioic anhydride (also known as maleic anhydride, or MA), acrylic acid (AA), a graft polymer containing a primary (1°) amine functional group, a graft polymer containing a secondary (2°) amine functional group, and a graft polymer containing isocyanate.
